# EUROPÄISCHE PATENTSCHRIFT

(11) **EP 3 231 647 B1**
(45) Veröffentlichungstag und Bekanntmachung des Hinweises auf die Patenterteilung: **28.10.2020**
(21) Anmeldenummer: 17164451.1
(22) Anmeldetag: 03.04.2017
(51) Int. Cl.: B60H 1/34

(54) **LUFTAUSSTRÖMER**
AIR VENT
DISPOSITIF D'ÉCOULEMENT D'AIR

(30) Priorität: 14.04.2016 DE 102016106888
(43) Veröffentlichungstag der Anmeldung: 18.10.2017
(73) Patentinhaber: fischer automotive systems GmbH & Co. KG, 72160 Horb a.N. (DE)
(72) Erfinder: Schaal, Falk, 72250 Freudenstadt (DE)
(74) Vertreter: Suchy, Ulrich Johannes

(56) Entgegenhaltungen:
- EP-A2- 1 331 116
- DE-A1-102015 017 008
- DE-A1-102015 017 009
- DE-B3-102006 062 178
- US-A- 4 585 177

## Beschreibung

Die Erfindung betrifft einen Luftausströmer zur Belüftung eines Fahrgastraums eines Kraftwagens mit warmer oder kalter Luft mit den Merkmalen des Oberbegriffs des Anspruchs 1. Solche Luftausströmer sind typischerweise in einer Mitte und an Seiten eines Armaturenbretts angeordnet. Die Erfindung ist weder auf die Verwendung des Luftausströmers zur Belüftung eines Fahrgastraums eines Kraftwagens noch auf die Anordnung in einem Armaturenbrett beschränkt.

Die Offenlegungsschrift DE 44 14 846 A1 offenbart einen Luftausströmer, der zu einem Einbau in beispielsweise eine Decke eines zu klimatisierenden Raums vorgesehen ist. Er weist ein hohlkugelschichtförmiges Gehäuse mit verschieden großen Öffnungen auf, das auch als Luftkanal aufgefasst werden kann. Auf einer Mittelachse des Gehäuses nahe einer kleineren der beiden Öffnungen, die als Luftauslass dient, ist eine Kugel schwenkbar um einen Mittelpunkt des Gehäuses angeordnet, die allgemein auch als umströmter Körper aufgefasst werden kann. Die Kugel weist zwei plattenförmige Luftleitelemente in einander rechtwinklig kreuzenden Mittelebenen auf, so dass durch Schwenken der Kugel mit ihren Luftleitelementen ein Luftstrom durch den Luftausströmer zu einer Seite gelenkt werden kann. Die Kugel des bekannten Luftausströmers lässt sich so schwenken, dass sie an einer Stelle eines Umfangs der kleineren, als Luftauslass des Luftausströmers dienenden Öffnung des Gehäuses anliegt, so dass dort ein Luftdurchlass versperrt ist und den Luftausströmer durchströmende Luft die Kugel im Gehäuse auf einem übrigen, freien Querschnitt umströmen muss. Eine Luftlenkungswirkung ist dadurch vergrößert.

Weitere Beispiele sind in den Dokumenten DE102006062178, EP1331116 und US4585177 offenbart.

Aufgabe der Erfindung ist es, einen alternativen Luftausströmer mit guter Luftlenkungswirkung vorzuschlagen.

Gelöst wird diese Aufgabe durch die Merkmale des Anspruchs 1. Der erfindungsgemäße Luftausströmer weist einen Luftkanal, ein beweglich im Luftkanal angeordnetes Luftleitelement und einen in dem Luftkanal angeordneten umströmten Körper auf. Ein Querschnitt des umströmten Körpers ist kleiner als ein Innenquerschnitt des Luftkanals, so dass ein freier Querschnitt für einen Durchtritt von Luft zwischen dem umströmten Körper und dem Luftkanal besteht. Vorzugsweise umschließt der freie Querschnitt den umströmten Körper vollständig, so dass mit Ausnahme etwaiger Befestigungselemente überall um den umströmten Körper herum Luft durch den Luftkanal strömen kann. Der umströmte Körper kann zentral in einer Mitte des Luftkanals oder exzentrisch im Luftkanal angeordnet sein. Möglich ist auch, dass der umströmte Körper an einer Umfangsstelle oder auf einem Umfangsabschnitt am Luftkanal anliegt oder mit dem Luftkanal einstückig ist. In diesem Fall kann Luft nur auf einem übrigen, freien Umfangsabschnitt zwischen dem umströmten Körper und dem Luftkanal durchströmen. Abhängig von einer Form des umströmten Körpers und des Luftkanals kann ein freier Querschnitt zwischen dem umströmten Körper und dem Luftkanal kleiner, gleich oder größer als in einer Strömungsrichtung vor dem umströmten Körper sein. Gemeint ist eine vorgesehene Strömungsrichtung durch den Luftkanal des erfindungsgemäßen Luftausströmers.

Das Luftleitelement ist in der vorgesehenen Strömungsrichtung vorzugsweise vor dem umströmten Körper und in einem Winkel schräg zu einer Längsrichtung des Luftkanals in diesem angeordnet, so dass es den Luftkanal durchströmende Luft zu einer Seite lenkt. Das Luftleitelement ist beispielsweise plattenförmig, es kann eben, eindimensional gebogen oder zweidimensional gewölbt sein oder eine andere Form aufweisen. Um einen Luftstrom durch den Luftkanal zu einer gewünschten Seite lenken zu können, ist das Luftleitelement um eine in der Längsrichtung des Luftkanals verlaufende Drehachse drehbar. Es genügt, wenn die Drehachse des Luftleitelements ungefähr in der Längsrichtung des Luftkanals verläuft. Eine Abweichung der Drehachse des Luftleitelements von der Längsrichtung des Luftkanals von beispielsweise bis zu etwa 30° ist denkbar. Wesentlich ist, dass durch eine Drehung des Luftleitelements um seine Drehachse eine Richtung einstellbar ist, in die ein Luftstrom durch den Luftkanal zur Seite gelenkt wird.

Insbesondere wenn das Luftleitelement, wie es vorzugsweise vorgesehen ist, in der vorgesehenen Strömungsrichtung durch den Luftkanal vor dem umströmten Körper angeordnet ist, lenkt das Luftleitelement einen Luftstrom durch den Luftkanal in einen Umfangsabschnitt des freien Querschnitts zwischen dem umströmten Körper und dem Luftkanal. Auf einem übrigen Umfangsabschnitt wird der umströmte Körper nicht, kaum oder jedenfalls weniger als in dem Umfangsabschnitt umströmt, in dessen Richtung das schräg im Luftkanal angeordnete Luftleitelement den Luftstrom lenkt. In der vorgesehenen Strömungsrichtung durch den Luftkanal nach dem umströmten Körper ist eine Luftlenkung zu einer Seite vergrößert, weil der Luftstrom nur aus einem Umfangsabschnitt schräg zur Längsrichtung des Luftkanals vom umströmten Körper abströmt und keine oder jedenfalls nur wenig Luft aus einem gegenüberliegenden Umfangsabschnitt entgegengesetzt schräg vom umströmten Körper abströmt. Durch die Drehbarkeit des Luftleitelements lässt sich eine Richtung einstellen, in die der Luftstrom gelenkt wird.

Das Luftleitelement liegt an einer Umfangsstelle oder auf einem Umfangsabschnitt innen am Luftkanal und/oder am umströmten Körper an, so dass an dieser Umfangsstelle oder auf diesem Umfangsabschnitt keine Luft zwischen dem Luftleitelement und dem Luftkanal und/oder dem umströmten Körper durchströmt. Die Luftlenkungswirkung zur Seite ist dadurch verbessert. Vorzugsweise sind das Luftleitelement, der Luftkanal und/oder der umströmte Körper so angeordnet und geformt, dass sich bei einer Drehung des Luftleitelements um die Drehachse die Anlagestelle des Luftleitelements innen am Luftkanal und/oder am umströmten Körper in einer Umfangsrichtung bewegt. Der erfindungsgemäße Luftausströmer kann allerdings auch so ausgebildet sein, dass in einer oder mehreren Drehstellungen des Luftleitelements das Luftleitelement an einer Umfangsstelle oder auf einem Umfangsabschnitt am Luftkanal und/oder am umströmten Körper anliegt und in einer oder mehreren anderen Drehstellungen das Luftleitelements nirgends am Luftkanal und/oder am umströmten Körper anliegt.

Der umströmte Körper kann im Luftkanal beweglich, insbesondere zur Seite beweglich, beispielsweise schwenk- und/oder verschiebbar angeordnet sein, so dass der umströmte Körper beispielsweise zwischen einer konzentrischen und einer exzentrischen Position im Luftkanal verstellbar ist. Eine Ausgestaltung der Erfindung sieht einen starr im Luftkanal angeordneten umströmten Körper vor, der sich einfach im Luftkanal befestigen lässt.

Vorzugsweise ist der umströmte Körper im Luftkanal von einem Ringraum umschlossen, der in der Längsrichtung des Luftkanals durchgeht. Bei dieser Ausgestaltung der Erfindung versperrt nicht der umströmte Körper eine Luftdurchströmung durch den Luftkanal an einer Umfangsstelle oder auf einem Umfangsabschnitt, sondern das Luftleitelement.

Eine Ausgestaltung der Erfindung sieht vor, dass der umströmte Körper einen Luftdurchlass in der Längsrichtung des Luftkanals aufweist. Dabei kommt es nicht darauf an, dass der Luftdurchlass exakt in der Längsrichtung des Luftkanals verläuft, sondern dass den Luftkanal durchströmende Luft sowohl den umströmten Körper umströmt als auch durch dessen Luftdurchlass durchströmt. Zusätzlich zu dem Luftstrom, der den umströmten Körper von dem Luftleitelement in eine Richtung zur Seite gelenkt umströmt, weist bei dieser Ausgestaltung der Erfindung der Luftausströmer einen zentralen Luftstrom durch den Luftdurchlass im umströmten Körper auf.

Eine Weiterbildung der Erfindung sieht vor, dass das Luftleitelement nicht nur um seine in der Längsrichtung des Luftkanals verlaufenden Drehachse drehbar, sondern zusätzlich um eine quer zum Luftkanal verlaufende Schwenkachse schwenkbar ist. Die Schwenkachse muss nicht exakt quer zum Luftkanal verlaufen, eine Abweichung um beispielsweise bis zu etwa 30° ist möglich. Diese Ausgestaltung der Erfindung ermöglicht eine Anpassung des Luftleitelements an einen Luftkanal und/oder einen umströmten Körper nicht kreisförmigen Querschnitts und/oder ein Verschließen des Luftkanals und/oder eines Luftdurchlasses des umströmten Körpers. Durch Schwenken um die Schwenkachse quer zum Luftkanal lässt sich das Luftleitelement bei seiner Drehung an einer beliebigen Umfangsstelle in Anlage an den Luftkanal und/oder den umströmten Körper bringen.

Zu einem Schwenken des Luftleitelements sieht eine Weiterbildung der Erfindung einen Anschlag für das Luftleitelement vor, der versetzt zur Schwenkachse im Luftkanal angeordnet ist. Stößt das Luftleitelements bei einer Drehung um seine in der Längsrichtung des Luftkanals verlaufende Drehachse gegen den Anschlag, wird es bei einer Weiterdrehung um seine quer zum Luftkanal verlaufende Schwenkachse verschwenkt. Diese Ausgestaltung der Erfindung erübrigt einen eigenen Schwenkantrieb des Luftleitelements.

Im Bereich des umströmten Körpers weist der Luftkanal einen größeren Innenquerschnitt als ein Querschnitt des umströmten Körpers auf, so dass ein freier Querschnitt für eine Luftdurchströmung zwischen dem umströmten Körper und dem Luftkanal besteht. Bei einer Ausgestaltung der Erfindung weitet sich der Luftkanal in der vorgesehenen Strömungsrichtung vor dem umströmten Körper auf und/oder verjüngt sich dahinter. Ein Luftstrom durch den Luftkanal des erfindungsgemäßen Luftausströmers wird bei dieser Ausgestaltung der Erfindung vom Luftleitelement zu einer Seite gelenkt und strömt weiter nach außen und anschließend wieder nach innen um den umströmten Körper, so dass die Luft schräg in einer Richtung aus dem Luftausströmer austritt.

Eine Ausgestaltung der Erfindung sieht einen kugel- oder teilkugelförmigen umströmten Körper und/oder einen Luftkanal mit kreisförmigem Innenquerschnitt zumindest im Bereich des umströmten Körpers vor. Eine andere Ausgestaltung der Erfindung sieht einen nicht kreisförmigen Innenquerschnitt des Luftkanals und einen korrespondierenden Querschnitt des umströmten Körpers vor. "Korrespondierend" meint einen maßstäblich oder nicht maßstäblich verkleinerten Querschnitt. Der Luftausströmer lässt sich dadurch an einen vorhandenen Bauraum und/oder eine Form beispielsweise eines Armaturenbretts, in das er eingebaut werden soll, anpassen und/oder nach ästhetischen Gesichtspunkten gestalten.

Eine Ausgestaltung der Erfindung sieht einen Drehantrieb des Luftleitelements beispielsweise mit einem Elektromotor vor. Ein durch die Ablenkung zur Seite schräg aus dem Luftausströmer ausströmender Luftstrom ändert dadurch seine Ausströmungsrichtung umlaufend.

In der Längsrichtung des Luftkanals weist der umströmte Körper bei einer Ausführungsform der Erfindung einen konvexen Umriss und/oder der Luftkanal im Bereich des umströmten Körpers einen konkaven Längs-Innenriss auf. Das bedeutet, dass sich in der vorgesehenen Strömungsrichtung durch den Luftkanal der umströmte Körper und/oder der Luftkanal innen zunächst aufweitet und anschließend wieder verjüngt.

Eine Ausgestaltung der Erfindung bzw. eine, mehrere oder alle vorstehenden Ausführungsformen der Erfindung weisen einen Luftausströmer mit einem schräg nach innen gerichteten Luftaustritt auf. Damit ist gemeint, dass Luft exzentrisch an einer Umfangsstelle oder auf einem Umfangsabschnitt schräg zum Zentrum gerichtet, also schräg nach innen zwischen dem umströmten Körper und dem Luftkanal ausströmt.

Die Erfindung wird nachfolgend anhand in der Zeichnung dargestellter Ausführungsbeispiele näher erläutert. Die Zeichnung ist als schematisierte und vereinfachte Darstellung zum Verständnis und zur Erläuterung der Erfindung zu verstehen. Es zeigen:
- Figur 1: einen Achsschnitt eines erfindungsgemäßen Luftausströmers;
- Figur 2: eine Abwandlung des Luftausströmers aus Figur 1 in einer anderen Stellung gemäß der Erfindung; und
- Figuren 3 bis 5: ein zweites Ausführungsbeispiel der Erfindung in einer perspektivischen Darstellung mit einem in einer Längsmittelebene aufgeschnittenen Luftkanal in verschiedenen Stellungen.

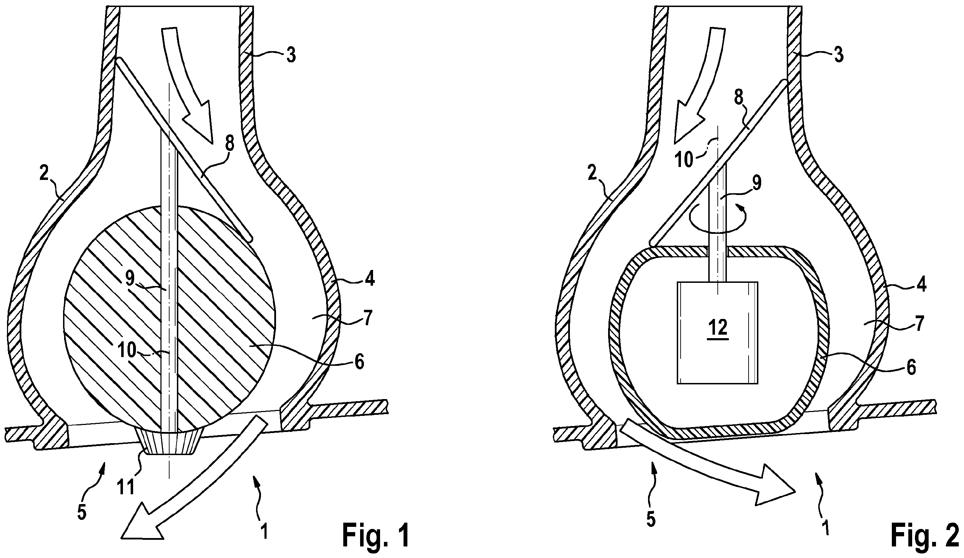

Der in Figur 1 dargestellte, erfindungsgemäße Luftausströmer 1 ist zur Belüftung eines Fahrgastraums in einem nicht dargestellten Kraftwagen und zum Einbau in beispielsweise eine Mitte und/oder in Seiten eines nicht dargestellten Armaturenbretts des Kraftwagens vorgesehen. Andere Verwendungen und Anordnungen des Luftausströmers 1 sind nicht ausgeschlossen.

Der Luftausströmer 1 weist einen rohrförmigen Luftkanal 2 mit einem kreisförmigen Querschnitt mit sich änderndem Durchmesser auf. Im Ausführungsbeispiel ist der Luftkanal 2 gerade, das heißt, er weist eine gerade Mittelachse auf, was allerdings nicht zwingend für die Erfindung ist. Ausgehend von einer Zuströmseite, die in Figur 1 oben ist, weist der Luftkanal 2 zunächst einen zylinderrohrförmigen Abschnitt 3 auf, der in einen hohlkugelschichtförmigen Abschnitt 4 übergeht, dessen dem zylinderrohrförmigen Abschnitt 3 abgewandtes offenes Ende eine Austrittsöffnung 5 des Luftkanals 2 und des Luftausströmers 1 bildet.

Konzentrisch in dem hohlkugelschichtförmigen Abschnitt 4 des Luftkanals 2 weist der Luftausströmer 1 einen kugelförmigen umströmten Körper 6 auf. Ein Durchmesser des umströmten Körpers 6 ist kleiner als ein Innendurchmesser des hohlkugelschichtförmigen Abschnitts 4 des Luftkanals 2, so dass zwischen dem umströmten Körper 6 und dem Luftkanal 2 ein Ringraum 7 zum Durchströmen von Luft frei bleibt. Mit anderen Worten: Es besteht ein kreisringförmiger freier Querschnitt zwischen dem umströmten Körper 6 und dem Luftkanal 1.

Auf einer Zuströmseite des umströmten Körpers 6, also in einem Übergangsbereich von dem zylinderrohrförmigen Abschnitt 3 in den hohlkugelschichtförmigen Abschnitt 4 des Luftkanals 2 und zugleich auf einer der Austrittsöffnung 5 gegenüberliegenden Seite des umströmten Körpers 6, ist ein Luftleitelements 8 im Luftkanal 2 angeordnet. In dem in Figur 1 gezeigten Ausführungsbeispiel der Erfindung ist das Luftleitelement 8 eine ebene, elliptische Scheibe, was allerdings nicht zwingend für die Erfindung ist. Das Luftleitelement 8 ist schräg zu einer Längsrichtung des Luftkanals 2 so angeordnet, dass es mit einem Randabschnitt innen am zylinderrohrförmigen Abschnitt 3 des Luftkanals 2 und mit einem gegenüberliegenden Randabschnitt auf der Zuströmseite an dem umströmten Körper 6 anliegt. Die am Luftkanal 2 und am umströmten Körper 6 anliegenden Randabschnitte befinden sich an einer Hauptachse des elliptischen Luftleitelements 8. Die Abschnitte, an denen das Luftleitelement 8 am Luftkanal 2 und am umströmten Körper 6 anliegen, werden hier als Umfangsabschnitte bezeichnet. Das Luftleitelement 8 kann auch punktförmig an Umfangsstellen des Luftkanals 2 und/oder des umströmten Körpers 6 anliegen.

Das Luftleitelement 8 ist an einem Ende einer Welle 9 befestigt, die den umströmten Körper 6 koaxial zum Luftkanal 2 durchsetzt und drehbar ist, so dass das Luftleitelement 8 um die Längsachse des Luftkanals 2 drehbar ist. Die Längsachse des Luftkanals 2 ist also zugleich eine Drehachse 10 des Luftleitelements 8. Zum Drehen weist die Welle 9 einen Drehknopf 11 auf. Durch die Anlage des Luftleitelements 8 auf einem Umfangsabschnitt innen am Luftkanal 2 und auf einem bezüglich eines Querschnitts des Luftkanals 2 gegenüberliegenden Umfangsabschnitt am umströmten Körper 6 versperrt das Luftleitelement 8 eine Luftzuströmung in den Ringraum 7 zwischen dem umströmten Körper 6 und dem Luftkanal 2 in dem Umfangsabschnitt, in dem es am Luftkanal 2 anliegt, so dass durch den Luftkanal 2 strömende Luft den Ringraum 7 im Wesentlichen nur in einem übrigen Umfangsabschnitt durchströmt. Weil sich der hohlkugelschichtförmigen Abschnitt 4 des Luftkanals 2 zur Austrittsöffnung 5 hin verjüngt, wird der Luftstrom nach einem größten Querschnitt des hohlkugelschichtförmigen Abschnitts 4 des Luftkanals 2 und nach einem größten Querschnitt des umströmten Körpers 6 nach innen umgelenkt und strömt wie in Figur 1 mit einem Pfeil dargestellt schräg nach innen durch die Austrittsöffnung 5 aus dem Luftausströmer 1 aus. Gemeint ist ein Querschnitt quer zum Luftausströmer 1, das heißt in einer Radialebene zu seiner Längsachse. Weil das Luftleitelement 8 den Ringraum 7 in einem gegenüberliegenden Umfangsabschnitt versperrt, strömt die Luft nur aus einem Umfangsabschnitt der Austrittsöffnung 5 aus und es gibt keinen oder einen nur kleinen entgegen gerichtet schräg nach innen aus einem gegenüberliegenden Umfangsabschnitt der Austrittsöffnung 5 austretenden Luftstrom. Dadurch wird eine schräge Ausströmung aus dem Luftausströmer 1 erreicht, wobei ein Winkel, unter dem der Luftstrom schräg ausströmt von einer Geometrie des Luftausströmers 1 abhängt.

Durch Drehung des Luftleitelements 8 lässt sich eine Richtung, in die ein Luftstrom durch den Luftausströmer 1 zur Seite gelenkt und zu einer entgegengesetzten Seite schräg nach innen ausströmt einstellen.

Der in Figur 2 gezeichnete, erfindungsgemäße Luftausströmer 1 ist im Wesentlichen gleich aufgebaut und funktioniert in gleicher Weise wie der Luftausströmer 1 aus Figur 1. Es werden deswegen nachfolgend im Wesentlichen die Unterschiede zwischen Figuren 1 und 2 erläutert und ergänzend auf die vorstehenden Ausführungen zu Figur 1 hingewiesen. Gleiche Bauteile sind mit gleichen Bezugszahlen versehen.

Der umströmte Körper 6 im Luftkanal 2 des Luftausströmers 1 aus Figur 2 ist ein Hohlkörper mit der Form einer Kugelschicht mit geschlossenen Stirnseiten. Im umströmten Körper 6 ist ein Elektromotor 12 angeordnet, der die Welle 9 des Luftleitelements 8 und damit das Luftleitelement 8 drehend um seine Drehachse 10, die zugleich die Längsachse des Luftkanals 2 ist, antreibt. Dadurch läuft der Umfangsabschnitt, durch den Luft den Ringraum 7 zwischen dem umströmten Körper 6 und dem Luftkanal 2 durchströmt, um. Die Richtung, in die der Luftstrom schräg nach innen durch die Austrittsöffnung 5 aus dem Luftausströmer 1 ausströmt, dreht sich.

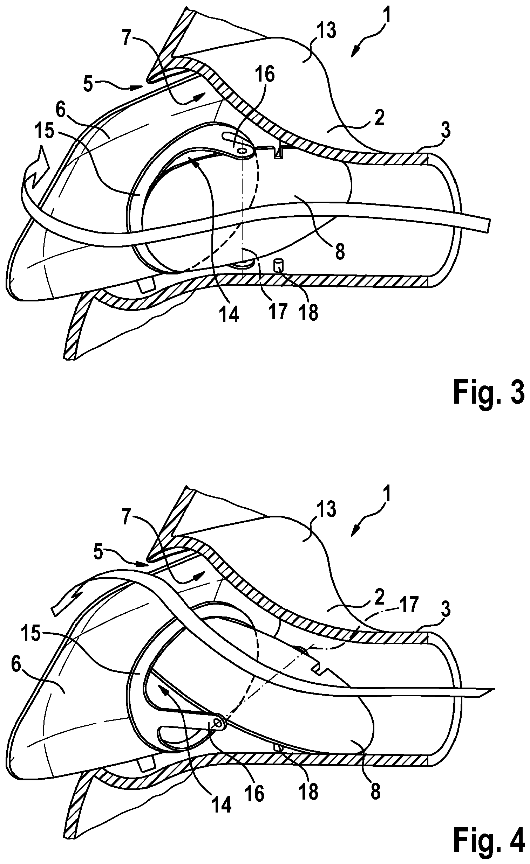

Bei dem in Figuren 3 bis 5 gezeichneten, erfindungsgemäßen Luftausströmer 1 ist der umströmte Körper 6 in der Längsrichtung des Luftkanals 2 dünner und als größerer Unterschied zu Figuren 1 und 2 nicht kugelförmig, sondern weist in einer Ansicht auf die Austrittsöffnung 5 des Luftkanals 2 gesehen ungefähr die Form eines schiefen Trapez mit gerundeten Ecken und balligen Seiten auf. Die Austrittsöffnung 5 und ebenso ein größter Querschnitt des umströmten Körpers 6 sind schräg zur Längsrichtung des Luftkanals 2 oder jedenfalls zur Mittelachse eines zylinderrohrförmigen Abschnitts 3 des Luftkanals 2 auf einer Zuströmseite.

Der Luftkanal 2 umschließt den umströmten Körper 6 mit einem umschließenden Abschnitt 13, in den der zylinderrohrförmigen Abschnitt 3 des Luftkanals 2 übergeht. Ausgehend von dem zylinderrohrförmigen Abschnitt 3 auf der Zuströmseite weitet sich der Luftkanal 2 im umschließenden Abschnitt 13 zunächst bis zum größten Querschnitt des umströmten Körpers 6 auf, von wo aus sich der Luftkanal 2 zur Austrittsöffnung 5 hin wieder verjüngt. Im umschließenden Abschnitt 13 weist der Luftkanal 2 des Luftausströmers 1 aus Figuren 3 bis 5 keinen kreisförmigen Querschnitt auf, sondern einen zum umströmten Körper 6 korrespondierenden Querschnitt. Mit "korrespondierend" ist ein maßstäblich- oder nicht-maßstäblich vergrößerter Querschnitt des umströmten Körpers 6 gemeint. Auch die Austrittsöffnung 5 weist eine zum umströmten Körper 6 korrespondierende Form auf. Die Austrittsöffnung 5 ist beispielsweise an eine Form eines Armaturenbretts angepasst oder nach ästhetischen Gesichtspunkten gestaltet. Wie in Figuren 1 und 2 besteht auch in Figuren 3 bis 5 ein Ringraum 7 zwischen dem umströmten Körper 6 und dem umschließenden Abschnitt 4 des Luftkanals 2, der den umströmten Körper 6 in Umfangs- und in Längsrichtung umschließt.

Im Unterschied zu Figuren 1 und 2 weist der umströmte Körper 6 des Luftausströmers 1 aus Figuren 3 bis 5 einen Luftdurchlass 14 auf, der den umströmten Körper 6 ungefähr in einer Mitte und in einer Längsrichtung des Luftkanals 2 durchsetzt.

Wie in Figuren 1 und 2 weist der Luftausströmer 1 aus Figuren 3 bis 5 eine ebene Platte mit einem gerundeten Rand als Luftleitelement 8 auf. Das Luftleitelement 8 ist symmetrisch zu einer Hauptachse und weist einen Rand mit sich ändernder Krümmung auf. Zur Drehbarkeit des Luftleitelements 8 um die Längsachse des Luftausströmers 1 weist der Luftausströmer 1 einen ringförmigen Drehhalter 15 auf, der an einer zuströmseitigen Mündung des Luftdurchlasses 14 des umströmten Körpers 6 drehbar gelagert ist. In einer Axialebene des Drehhalters 15 stehen einander gegenüber zwei Halterfinger 16 in Richtung der Zuströmseite von dem ringförmigen Drehhalter 15 ab. An freien Enden der Halterfinger 16 ist das Luftleitelement 8 um eine Schwenkachse 17 quer zum Luftkanal 2 schwenkbar gelagert.

Durch Drehen des Luftleitelements 8 zusammen mit dem Drehhalter 16 um die in Längsrichtung des Luftkanals 2 verlaufende Drehachse lässt sich ein Luftstrom durch den Luftkanal 1 wie in Figur 1 in beliebiger Richtung im Ringspalt 7 um den umströmten Körper 6 herum lenken, so dass der Luftstrom schräg nach innen in einer gewünschten Richtung aus der Austrittsöffnung 5 des Luftausströmers 1 austritt. Figur 3 zeigt eine Schräg- und Drehstellung des Luftleitelements 8, das den mit einem Pfeil gezeichneten Luftstrom durch den Luftausströmer 1 auf einer Seite um den umströmten Körper 6 herum lenkt. In der Schräg- und Drehstellung in Figur 4 lenkt das Luftleitelement 8 den Luftstrom durch den Luftausströmer 1 oben um den umströmten Körper 6 herum, so dass er schräg nach unten aus der Austrittsöffnung 5 des Luftausströmers 1 ausströmt. In gleicher Weise ist es durch Drehung des Luftleitelements 8 möglich, den Luftstrom auf der anderen Seite oder unten um den umströmten Körper 6 herum zu lenken, so dass in letzterem Fall der Luftstrom schräg nach oben aus der Austrittsöffnung 5 des Luftausströmers 1 ausströmt. "Unten" und "oben" beziehen sich auf eine vorgesehene Einbaulage des Luftausströmers 1.

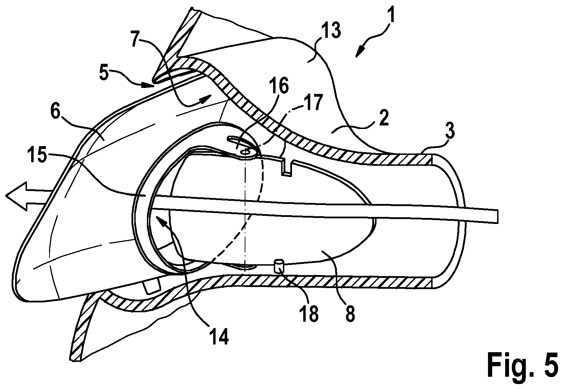

In Figur 5 ist das Luftleitelement 8 um seine Schwenkachse 17 in die Längsrichtung des Luftkanals 2 geschwenkt. In dieser Stellung strömt Luft, die durch den zylinderrohrförmigen Abschnitt 3 des Luftkanals 1 einströmt, wie mit dem Pfeil in Figur 5 gezeigt, durch den Luftdurchlass 14 im umströmten Körper 6 und umströmt den umströmten Körper 6 zusätzlich allseitig. Der Luftstrom tritt in der Längsrichtung des Luftkanals 1 aus der Austrittsöffnung 5 des Luftausströmers 1 aus.

Zum Schwenken des Luftleitelements 8 weist der Luftkanal 2 einen nach innen vorstehenden Zapfen als Anschlag 18 auf, der von der Schwenkachse 17 des Luftleitelements 8 etwas in die Zuströmrichtung versetzt angeordnet ist. Zum Schwenken wird das Luftleitelement 8 um seine in der Längsrichtung des Luftkanals 2 verlaufende Drehachse gedreht, bis es gegen den Anschlag 18 stößt. Bei einer Weiterdrehung schwenkt der zur Schwenkachse 17, die quer zum Luftkanal 2 verläuft, versetzte, also exzentrische Anschlag 18 das Luftleitelement 8 in die in Figur 5 dargestellte gerade Stellung. Durch Drehung in eine Richtung lässt sich das Luftleitelement 8 in eine und durch Drehung in entgegengesetzter Richtung in eine entgegengesetzte Richtung schwenken, wobei diese Schwenkbewegung zurück in eine schräge Stellung durch eine Feder (nicht dargestellt) bewirkt werden kann. Ein eigener Schwenkantrieb des Luftleitelements 8 ist entbehrlich. Allerdings ist ein Schwenkantrieb des Luftleitelements 8 um seine quer zum Luftkanal 2 verlaufende Schwenkachse 17 möglich, der den Anschlag 18 entbehrlich macht und ein beliebiges Drehen des Luftleitelements 18 um seine in der Längsrichtung des Luftkanals 2 verlaufende Drehachse ermöglicht, ohne dass das Luftleitelement 18 an einem Anschlag anstößt (nicht dargestellt).

Im Übrigen entspricht der Luftausströmer 1 aus Figuren 3 bis 5 dem Luftausströmer 1 aus Figur 1 und es wird hinsichtlich Figuren 3 bis 5 ergänzend auf die Ausführungen zu Figur 1 hingewiesen. Gleiche Bauteile sind in allen Figuren mit gleichen Bezugszahlen bezeichnet.

### Bezuqszeichenliste

### Luftausströmer

- 1: Luftausströmer
- 2: Luftkanal
- 3: zylinderrohrförmiger Abschnitt
- 4: hohlkugelschichtförmiger Abschnitt
- 5: Austrittsöffnung
- 6: umströmter Körper
- 7: Ringraum
- 8: Luftleitelement
- 9: Welle
- 10: Drehachse
- 11: Drehknopf
- 12: Elektromotor
- 13: umschließender Abschnitt
- 14: Luftdurchlass
- 15: Drehhalter
- 16: Halterfinger
- 17: Schwenkachse
- 18: Anschlag

## Patentansprüche

1. Luftausströmer (1), mit einem Luftkanal (2), einem in dem Luftkanal (2) beweglich angeordneten Luftleitelement (8) und einem in dem Luftkanal (2) angeordneten umströmten Körper (6), dessen Querschnitt kleiner als ein Innenquerschnitt des Luftkanals (2) ist, wobei das Luftleitelement (8) schräg zu einer Längsrichtung des Luftkanals (2) angeordnet ist und um eine in der Längsrichtung des Luftkanals (2) verlaufende Drehachse (10) drehbar ist, **dadurch gekennzeichnet, dass** das Luftleitelement (8) an einer Umfangsstelle oder auf einem Umfangsabschnitt innen am Luftkanal (2) und/oder am umströmten Körper (6) anliegt, so dass sich bei einer Drehung des Luftleitelements (8) um die Drehachse (10) die Anlagestelle des Luftleitelements (8) innen am Luftkanal (2) und/oder am umströmten Körper (6) in einer Umfangsrichtung bewegt.

2. Luftausströmer nach Anspruch 1, **dadurch gekennzeichnet, dass** der umströmte Körper (6) starr im Luftkanal (2) angeordnet ist.

3. Luftausströmer nach einem der vorhergehenden Ansprüche, **dadurch gekennzeichnet, dass** der umströmte Körper (6) im Luftkanal (2) von einem in der Längsrichtung durchgehenden Ringraum (7) umschlossen ist.

4. Luftausströmer nach einem der vorhergehenden Ansprüche, **dadurch gekennzeichnet, dass** der umströmte Körper (6) einen Luftdurchlass (14) in der Längsrichtung des Luftkanals (2) aufweist.

5. Luftausströmer nach einem der vorhergehenden Ansprüche, **dadurch gekennzeichnet, dass** das Luftleitelement (8) plattenförmig ist.

6. Luftausströmer nach einem der vorhergehenden Ansprüche, **dadurch gekennzeichnet, dass** das Luftleitelement (8) um eine Schwenkachse (17) schwenkbar ist, die quer oder schräg zu der Längsrichtung des Luftkanals (2) verläuft.

7. Luftausströmer nach Anspruch 6, **dadurch gekennzeichnet, dass** der Luftkanal (2) einen Anschlag (18) für das Luftleitelement (8) aufweist, der versetzt zur Schwenkachse (17) des Luftleitelements (8) angeordnet ist und gegen den das Luftleitelement (8) stößt, wenn es um seine Drehachse (10) gedreht wird und dadurch um die Schwenkachse (17) schwenkt.

8. Luftausströmer nach einem der vorhergehenden Ansprüche, **dadurch gekennzeichnet, dass** der Luftkanal (2) im Bereich des umströmten Körpers (6) einen größeren Innenquerschnitt als ein Querschnitt des umströmten Körpers (6) aufweist und dass sich der Luftkanal (2) in einer Durchströmungsrichtung vor dem umströmten Körper (6) erweitert und/oder hinter dem umströmten Körper (6) verjüngt.

9. Luftausströmer nach einem der vorhergehenden Ansprüche, **dadurch gekennzeichnet, dass** der umströmte Körper (6) eine Kugelform oder Teilkugelform und/oder der Luftkanal (2) im Bereich des umströmten Körpers (6) einen kreisförmigen Innenquerschnitt aufweist.

10. Luftausströmer nach einem der Ansprüche 1 bis 8, **dadurch gekennzeichnet, dass** der Luftkanal (2) einen nicht kreisförmigen Innenquerschnitt und der umströmte Körper (6) einen korrespondierenden Querschnitt aufweist.

11. Luftausströmer nach einem der vorhergehenden Ansprüche, **dadurch gekennzeichnet, dass** das Luftleitelement (8) drehend angetrieben ist.

12. Luftausströmer nach einem der vorhergehenden Ansprüche, **dadurch gekennzeichnet, dass** der umströmte Körper (6) einen konvexen Umriss in der Längsrichtung des Luftkanals (2) und/oder der Luftkanal (2) im Bereich des umströmten Körpers (6) einen konkaven Längs-Innenriss aufweist.

13. Luftausströmer nach einem der vorhergehenden Ansprüche, **dadurch gekennzeichnet, dass** der Luftausströmer (1) einen Luftaustritt schräg nach innen aufweist.

## Claims

1. Air vent (1), having an air duct (2), an air-guide element (8) movably arranged in the air duct (2), and a body (6) around which flow occurs, which body is arranged in the air duct (2) and the cross-section of which is smaller than an internal cross-section of the air duct (2), the air-guide element (8) being arranged obliquely with respect to a longitudinal direction of the air duct (2) and being rotatable about a rotational axis (10) running in the longitudinal direction of the air duct (2), **characterised in that** the air-guide element (8) is in contact internally with the air duct (2) and/or with the body (6) around which flow occurs at a point on the circumference or on a portion of the circumference, so that, on rotation of the air-guide element (8) about the rotational axis (10), the point of contact of the air-guide element (8) internally with the air duct (2) and/or with the body (6) around which flow occurs moves in a circumferential direction.

2. Air vent according to claim 1, **characterised in that** the body (6) around which flow occurs is arranged rigidly in the air duct (2).

3. Air vent according to either one of the preceding claims, **characterised in that** the body (6) around which flow occurs is surrounded in the air duct (2) by an annular space (7) that is continuous in the longitudinal direction.

4. Air vent according to any one of the preceding claims, **characterised in that** the body (6) around which flow occurs has an air passageway (14) in the longitudinal direction of the air duct (2).

5. Air vent according to any one of the preceding claims, **characterised in that** the air-guide element (8) is plate-like.

6. Air vent according to any one of the preceding claims, **characterised in that** the air-guide element (8) is pivotable about a pivot axis (17) which runs transversely or obliquely with respect to the longitudinal direction of the air duct (2).

7. Air vent according to claim 6, **characterised in that** the air duct (2) has a stop (18) for the air-guide element (8), which stop is arranged offset relative to the pivot axis (17) of the air-guide element (8) and against which the air-guide element (8) strikes when the latter is rotated about its rotational axis (10) and thus pivots about the pivot axis (17).

8. Air vent according to any one of the preceding claims, **characterised in that** the air duct (2), in the region of the body (6) around which flow occurs, has a larger internal cross-section than a cross-section of the body (6) around which flow occurs, and the air duct (2), in a direction of flow, widens before the body (6) around which flow occurs and/or tapers after the body (6) around which flow occurs.

9. Air vent according to any one of the preceding claims, **characterised in that** the body (6) around which flow occurs has a spherical shape or semi-spherical shape and/or the air duct (2) has a circular internal cross-section in the region of the body (6) around which flow occurs.

10. Air vent according to any one of claims 1 to 8, **characterised in that** the air duct (2) has a non-circular internal cross-section and the body (6) around which flow occurs has a complementary cross-section.

11. Air vent according to any one of the preceding claims, **characterised in that** the air-guide element (8) is driven in rotation.

12. Air vent according to any one of the preceding claims, **characterised in that** the body (6) around which flow occurs has a convex contour in the longitudinal direction of the air duct (2) and/or the air duct (2) has a concave longitudinal internal contour in the region of the body (6) around which flow occurs.

13. Air vent according to any one of the preceding claims, **characterised in that** the air vent (1) has air discharge obliquely towards the inside.

## Revendications

1. Dispositif d'écoulement d'air (1) doté d'un canal d'aération (2), d'un élément de conduite d'air (8) agencé de manière mobile dans le canal d'aération (2) et d'un corps placé dans l'écoulement (6) disposé dans le canal d'aération (2), dont la section est inférieure à la section interne du canal d'aération (2), dans lequel l'élément de conduite d'air (8) est disposé en biais par rapport à une direction longitudinale du canal d'aération (2) et peut tourner autour d'un axe de rotation (10) s'étendant dans la direction longitudinale du canal d'aération (2), **caractérisé en ce que** l'élément de conduite d'air (8) est en appui à un endroit de la circonférence ou sur une section de la circonférence à l'intérieur du canal d'aération (2) et/ou sur le corps placé dans l'écoulement (6), de sorte que le point d'appui de l'élément de conduite d'air (8) se déplace dans une direction circonférentielle à l'intérieur du canal d'aération (2) et/ou sur le corps placé dans l'écoulement (6) lors d'une rotation de l'élément de conduite d'air (8) autour de l'axe de rotation (10).

2. Dispositif d'écoulement d'air selon la revendication 1, **caractérisé en ce que** le corps placé dans l'écoulement (6) est disposé rigidement dans le canal d'aération (2).

3. Dispositif d'écoulement d'air selon l'une des revendications précédentes, **caractérisé en ce que** le corps placé dans l'écoulement (6) est entouré dans le canal d'aération (2) par un espace annulaire (7) continu dans la direction longitudinale.

4. Dispositif d'écoulement d'air selon l'une des revendications précédentes, **caractérisé en ce que** le corps placé dans l'écoulement (6) comporte un passage d'air (14) dans la direction longitudinale du canal d'aération (2).

5. Dispositif d'écoulement d'air selon l'une des revendications précédentes, **caractérisé en ce que** l'élément de conduite d'air (8) est en forme de plaque.

6. Dispositif d'écoulement d'air selon l'une des revendications précédentes, **caractérisé en ce que** l'élément de conduite d'air (8) peut pivoter autour d'un axe de pivot (17), lequel s'étend transversalement ou en biais par rapport à la direction longitudinale du canal d'aération (2).

7. Dispositif d'écoulement d'air selon la revendication 6, **caractérisé en ce que** le canal d'aération (2) comporte une butée (18) pour l'élément de conduite d'air (8), laquelle est disposée de manière décalée par rapport à l'axe de pivot (17) de l'élément de conduite d'air (8) et que l'élément de conduite d'air (8) vient heurter lorsqu'il est tourné autour de son axe de rotation (10) et pivote de ce fait autour de l'axe de pivot (17).

8. Dispositif d'écoulement d'air selon l'une des revendications précédentes, **caractérisé en ce que** le canal d'aération (2) présente dans la zone du corps placé dans l'écoulement (6) une section interne supérieure à une section du corps placé dans l'écoulement (6) et **en ce que** le canal d'aération (2) s'élargit dans une direction d'écoulement avant le corps placé dans l'écoulement (6) et/ou se rétrécit derrière le corps placé dans l'écoulement (6).

9. Dispositif d'écoulement d'air selon l'une des revendications précédentes, **caractérisé en ce que** le corps placé dans l'écoulement (6) présente une forme sphérique ou partiellement sphérique et/ou le canal d'aération (2) présente dans la zone du corps placé dans l'écoulement (6) une section interne circulaire.

10. Dispositif d'écoulement d'air selon l'une des revendications 1 à 8, **caractérisé en ce que** le canal d'aération (2) présente une section interne non circulaire et le corps placé dans l'écoulement (6) présente une section correspondante.

11. Dispositif d'écoulement d'air selon l'une des revendications précédentes, **caractérisé en ce que** l'élément de conduite d'air (8) est entraîné en rotation.

12. Dispositif d'écoulement d'air selon l'une des revendications précédentes, **caractérisé en ce que** le corps placé dans l'écoulement (6) présente un contour convexe dans la direction longitudinale du canal d'aération (2) et/ou le canal d'aération (2) présente dans la zone du corps placé dans l'écoulement (6) un contour interne longitudinal concave.

13. Dispositif d'écoulement d'air selon l'une des revendications précédentes, **caractérisé en ce que** le dispositif d'écoulement d'air (1) comporte une sortie d'air en biais vers l'intérieur.
